# EUROPÄISCHE PATENTSCHRIFT

(11) **EP 1 262 801 B1**
(45) Veröffentlichungstag und Bekanntmachung des Hinweises auf die Patenterteilung: **12.04.2006**
(21) Anmeldenummer: 02010412.1
(22) Anmeldetag: 08.05.2002
(51) Int. Cl.: G02B 5/08, G02B 7/182, C04B 37/00, C04B 35/80

(54) **Verfahren zur Herstellung eines ultraleichten und ultrasteifen vollkeramischen Reflektors**
Method for producing an ultra-light and ultra-rigid fully ceramic reflector
Méthode de fabrication d'un réflecteur tout-céramique ultra-légèr et ultra-rigide

(30) Priorität: 23.05.2001 DE 10125554
(43) Veröffentlichungstag der Anmeldung: 04.12.2002
(60) Teilanmeldung: 05018617.0
(73) Patentinhaber: EADS Astrium GmbH, 81663 München (DE); ECM Ingenieur-Unternehmen für Energie-und Umwelttechnik GmbH, 80339 München (DE)
(72) Erfinder: Krödel, Matthias, 85521 Ottobrunn (DE); Ziegler, Fred, 82024 Taufkirchen (DE)
(74) Vertreter: Meissner, Bolte & Partner

(56) Entgegenhaltungen:
- EP-A- 0 987 096
- EP-A- 1 138 654
- DE-A- 3 724 156
- US-A- 4 856 887
- US-A- 5 002 378
- US-B1- 6 206 531

## Beschreibung

Durch die stetig steigenden Anforderungen an neue größere, hochkomplexe und leistungsfähige Reflektoren ist es notwendig, diese Reflektoren noch leichter, steifer und leistungsfähiger zu machen. Eine Möglichkeit hierzu ist, solche Reflektoren aus keramischen Materialien herzustellen.

Bisher wurden keramische Reflektoren vor allem aus Glas oder Glaskeramiken, gesintertem Siliziumcarbid oder C/SiC hergestellt. In diesen Fällen wurden die Reflektoren aus einer dicken Platte hergestellt, wobei dreieckförmige oder hexagonale o.a. Strukturen ausgefräst wurden, um diese Reflektoren entsprechend den Anforderungen mit einem möglichst geringen Flächengewicht herzustellen. Insbesondere im Falle von Glas ist die Bearbeitung sehr aufwändig und damit auch mit sehr hohen Kosten verbunden, so dass die vorgenannten Strukturen nur sehr langsam und aufwendig mit teuren Spezialwerkzeugen herausgearbeitet werden können.

Bei gesintertem SiC und C/SiC erfolgt die Bearbeitung der Struktur bei den bisher bekannten Verfahren im sogenannten Grünzustand, d.h. in einem relativ weichen Zustand, so dass die Bearbeitung wesentlich einfacher und kostengünstiger ist. Bei gesintertem SiC tritt jedoch beim Sinterprozess ein nicht unerheblicher Schrumpf auf, der nicht genau gleichbleibend ist und somit zu deutlich größeren Nacharbeiten im keramischen Zustand führt als bei C/SiC. Im Gegensatz zu Glas weisen die SiC-Keramiken eine bis zu 100 mal bessere Wärmeleitfähigkeit und eine deutlich höhere spezifische Steifigkeit auf. Was diese Werkstoffe für hochsteife Reflektoren geradezu prädestiniert.

Aus DE 42 07 009 C2 und DE 43 29 551 A1 ist bekannt, dass C/SiC Reflektoren aus einem porösen Kohlenstoff-Trägerkörper hergestellt werden, indem diese durch mechanische Bearbeitung, insbesondere durch Fräsen, in die notwendige Endform gebracht werden.

Dieses Verfahren ist nicht nur relativ aufwendig, sondern es birgt die Gefahr, dass gerade bei Reflektoren, die ein extrem niedriges Flächengewicht von deutlich kleiner 15 Kg/m² oder gar kleiner als 10 Kg/m² aufweisen sollen, die Struktur bei der mechanischen Bearbeitung beschädigt wird, was zu einer deutlichen Verschlechterung der Materialeigenschaften führt bzw. derartige Flächengewichte überhaupt nicht herstellbar sind. Das Flächengewicht definiert sich dabei als das Gewicht pro Fläche, wobei bei Reflektoren die Dicke des Reflektors und seine Fläche in einem definierten Verhältnis zueinander stehen. So wird beispielsweise im allgemeinen bei einer Genauigkeit der Reflektor-Kontur von A/10 eine Dicke des Reflektors gewählt, die nicht kleiner ist als ein Zehntel des Durchmessers des Reflektors.

Ebenfalls aus DE 42 07 009 C2 ist bekannt, dass keramische Wabenstrukturen mit einer dichten Deckschicht aus Kohlefasergewebe-Prepregs verbunden werden und so eine Leichtgewichtskonstruktion erreicht wird. Diese Technik weist jedoch gerade unter thermischen Zyklen den entscheidenden Nachteil auf, dass das Material der Waben und der Deckschicht in den thermo-mechanischen Eigenschaften nicht kompatibel ist, was zu Delaminationen und/oder Rissen führt, und zudem die Wärmeleitfähigkeit der Deckschicht sehr gering ist.

Eine weitere Möglichkeit zur Herstellung leichter Reflektoren ist in US 6,206,531 beschrieben. Dort wird die Verwendung einer Kernstruktur aus einem Schaum vorgeschlagen, wobei anschließend zur Herstellung des gesamten Reflektors eine relativ aufwändige Schichtstruktur erzeugt werden muss. Auch bei einem so hergestellten Reflektor kann es außerdem zur Ablösung der Schichten voneinander aufgrund unterschiedlicher Ausdehnungsverhalten kommen, wie dies auch bei der DE 42 07 009 der Fall ist.

Die EP 0 987 096 A2 beschreibt die Herstellung einer hochsteifen Leichtgewichtsstruktur, bei der zur Bildung eines Stützgerüsts zwischen einer Frontplatte und einer Rückplatte aus faserverstärkter Keramik rohrförmige und/oder plattenförmige und/oder leistenförmige Teile aus faserverstärkter Keramik, vorzugsweise aus Kohlenstofffaserverstärktem Kohlenstoff oder Kohlenstofffäser-verstärktem Siliziumkarbid aufgestellt und mittels Kunstharz verklebt werden. Durch die im Ergebnis ungleichmäßige Aussteifung der dort beschriebenen Leichtgewichtsstruktur, die sich in einer flächenmäßig ungleichförmigen Unterstützung der Front- bzw. der Rückplatte durch die rohrförmigen und/oder plattenförmigen und/oder leistenförmigen Teile ergibt, ist ein Schleifen bzw. Polieren der dortigen Frontplatte, die als Spiegelfläche ausgebildet sein kann, ohne störende Quilting-Effekte (Steppdecken-Effekte), also ohne ein lokales Aufwölben der dortigen Oberflächenstruktur nicht möglich. Dieser äußerst nachteilige Effekt resultiert daraus, dass beim Schleifen oder Polieren dortiger Struktur über den Stützrippen aufgrund der dort höheren Steifigkeit der Struktur ein größerer Materialabtrag erfolgt, als in den Bereichen zwischen den Stützrippen, da in diesen übrigen Bereichen die Struktur aufgrund einer gewissen Biegsamkeit des Materials nachgiebiger ist. Somit ist bei der dort offenbarten Leichtgewichtsstruktur eine gleichmäßige Oberfläche praktisch nicht realisierbar.

Die Aufgabe der vorliegenden Erfindung ist es, ein verbessertes Verfahren zur einfachen und sicheren Herstellung eines leichten und steifen Reflektors bereit zu stellen.

Der nach dem erfindungsgemäßen Verfahren hergestellte Reflektor beinhaltet ein keramisches Material mit einem niedrigen Flächengewicht. Das keramische Material ist auf eine erste Oberfläche einer keramischen Frontplatte aufgebracht, die gemäß der gewünschten Reflektorkontur vorgeformt ist. Damit kann auf einfache Weise eine definierte Kontur des Reflektors erzielt werden. Es ist außerdem vorgesehen, dass das keramische Material mit der Frontplatte monolithisch verbunden ist, wobei die Frontplatte und das keramische Material weitgehend die gleichen thermischen Eigenschaften haben. Damit wird die Fehlerquelle eines möglichen Ablösens verschiedener Schichten einer Reflektorstruktur, wie sie beispielsweise bei der US 6,206,531 auftreten kann, vermieden. Um eine besonders leichte und trotzdem steife Konstruktion zu erhalten, ist für das keramische Material ein C/SiC-Schaum vorgesehen. Als keramische Frontplatte ist eine C/SiC-Frontplatte vorgesehen. Da sowohl der Schaum als auch die Frontplatte aus C/SiC bestehen und diese überdies monolithisch verbunden sind, liegen keine unterschiedlichen Materialschichten mit unterschiedlichen thermischen Eigenschaften vor, d.h. es besteht nicht die Gefahr einer Ablösung verschiedener Materialschichten voneinander oder einer Rissbildung aufgrund eines unterschiedlichen Ausdehnungsverhaltens.

Es können weiterhin auf der ersten Oberfläche der Frontplatte Erhebungen und/oder Vertiefungen aus C/SiC vorgesehen werden. Diese können entweder dazu dienen, durch eine Verzahnung mit dem keramischen Material eine verbesserte Verbindung zwischen Frontplatte und keramischem Material herzustellen, oder sie können beispielsweise in Form von Rippen oder Kanälen zur Verbesserung der thermischen Eigenschaften beitragen, beispielsweise zur Ausbildung von Passagen für ein gasförmiges oder flüssiges Kühlmedium. Da das keramische Material als poröses Material, nämlich als Schaum, ausgebildet ist, und damit eine gewisse Durchlässigkeit aufweist, so kann dieses Material selbst entsprechend seiner Durchlässigkeit als Passage für ein Temperiermedium verwendet werden. Es kann daher vorgesehen werden, dass ein Wärmeaustausch zwischen dem keramischen Material und einem Temperiermedium besteht. So kann ein Keramikschaum, mit oder ohne eine Rippen- oder Kanalstruktur, als integraler Wärmetauscher des Reflektors zur Wärmeübertragung beispielsweise von der Spiegeloberfläche auf ein Kühlmedium (Gas oder Flüssigkeit) eingesetzt werden. Umgekehrt kann auch eine Erwärmung der Reflektorstruktur durch ein Temperiermedium vorgesehen sein.

Um eine weitere Gewichtsreduktion der Reflektorstruktur bei weitgehend gleichbleibender Steifigkeit zu erzielen, kann vorgesehen werden, dass auf das keramische Material, also den C/SiC-Schaum, eine C/SiC-Rückplatte aufgebracht ist. Dann kann die Gesamtstruktur entsprechend dünner gemacht werden. Um wiederum mögliche Fehlerquellen aufgrund unterschiedlicher Schichten der Struktur auszuschließen, wird vorgesehen, dass die C/SiC-Rückplatte mit dem C/SiC-Schaum monolithisch verbunden ist. Es können grundsätzlich auch für die Rückplatte analog zur Frontplatte je nach Erfordernis Erhebungen und/oder Vertiefungen vorgesehen werden.

Durch die gleichmäßige Aussteifung der Reflektorstruktur, wie sie gerade für den Fall eines porösen C/SiC-Schaumes als keramisches Materials vorgesehen ist, wird im Gegensatz zum Stand der Technik ein Schleifen und Polieren der Spiegelfläche ohne störende Quilting-Effekte (Steppdecken-Effekte), also ohne ein lokales Aufwölben der Reflektor-Struktur, ermöglicht. Solche Effekte ergeben sich beim Schleifen oder Polieren von Strukturen, wie sie beispielsweise die DE 42 07 009 beschreibt, die keramische Materialien mit einer Wabenstruktur oder ähnlichen Stützrippen beinhalten. Beim Schleifen oder Polieren ist dann der Materialabtrag über den Stützrippen aufgrund der höheren Steifigkeit der Struktur in diesen Bereichen größer als über den Bereichen zwischen den Stützrippen, da in diesen übrigen Bereichen die Struktur aufgrund einer meist gegebenen gewissen Biegsamkeit des Materials nachgiebiger ist. Das Material weicht folglich in diesen übrigen Bereichen unter dem Polierdruck nach unten aus. Nach Wegnahme des Polierdruckes steigen in diesen übrigen Bereichen Buckel auf. Dies wird gerade bei Verwendung eines C/SiC-Schaumes vermieden.

Es kann weiterhin vorgesehen werden, dass eine schleifbare und polierbare Oberflächenbeschichtung auf der C/SiC-Frontplatte aufgebracht ist und die Oberflächenbeschichtung mit der C/SiC-Frontplatte monolithisch verbunden ist. Dadurch wird einerseits erreicht, dass die Reflektoroberfläche direkt geschliffen und auf die erforderliche Rauhigkeit, insbesondere zur Erzielung eines möglichst geringen Streulichtpegels, poliert werden kann. Die monolithische Verbindung verhindert wiederum mögliche Fehlerquellen. Durch die monolithische Verbindung aller wesentlichen Komponenten des Reflektors wird erreicht, dass der gesamte Reflektor einschließlich der polierten Spiegelfläche aus einem monolithischen Material besteht. Es liegen daher im Gegensatz zum Stand der Technik keine unterschiedlichen Schichten mit unterschiedlichen Materialeigenschaften vor, die als Fehlerquellen wirken können.

Die vorstehend genannte Aufgabe wird erfindungsgemäß durch ein Verfahren zur Herstellung eines Reflektors gelöst, wobei ein keramisches Material mit niedrigem Flächengewicht, um die Herstellung des Reflektors mit einem Flächengewicht von weniger als 15 kg/m² zu ermöglichen, auf eine erste Oberfläche einer keramischen Frontplatte aufgebracht wird, welche gemäß der Reflektorkontur vorgeformt ist, und wobei anschließend das keramische Material mit der Frontplatte monolithisch verbunden wird. Gemäß der Erfindung ist vorgesehen, dass zunächst eine polymere Schaumstruktur mit einer Suspension aus einem keramischen Ausgangsmaterial, welches Silizium enthält, überzogen wird. Die polymere Struktur kann beispielsweise durch ein Eintauchen in die Suspension oder unter Ausnutzung von Kapillareffekten bei Verwendung einer porösen polymeren Struktur mit der Suspension überzogen werden. Anschließend wird die so behandelte Schaumstruktur zur Erzeugung eines keramischen Zwischenproduktes mit einer Schaumstruktur unter Luftabschluss pyrolysiert. Durch die Pyrolyse wird die polymere Struktur zerstört, es verbleibt ein keramisches Zwischenprodukt, das weitgehend die Struktur der polymeren Struktur vor deren Pyrolyse besitzt. Nach der Pyrolyse wird das keramische Zwischenprodukt auf eine Carbon/Carbon-Frontplatte aufgebracht und anschließend erfolgt eine Infiltration eines Siliziums enthaltenden Materials bei Temperaturen über 1350° C zur Herstellung einer monolithischen C/SiC-Struktur aus einem C/SiC-Schaum und einer C/SiC-Frontplatte. Damit wird also eine monolithische Verbindung der einzelnen Komponenten des Reflektors erzielt und es entsteht dabei das endgültige keramische Material. Die geeignete Wahl der Werkstoffe, wie hier dargestellt, für das keramische Material bzw. das keramische Zwischenprodukt, die Frontplatte, die Rückplatte trägt mit zur Realisierung dieser monolithischen Verbindung bei. Die Vorteile eines solchen Verfahrens wurden bereits vorstehend anhand der damit herstellbaren Reflektoranordnung erläutert.

Es kann weiter vorgesehen werden, dass vor dem Aufbringen des Schaumes auf der ersten Oberfläche der Frontplatte Erhebungen und/oder Vertiefungen aus dem gleichen Material wie das der Frontplatte erzeugt werden. Die Anwendungsmöglichkeiten für solche Erhebungen und/oder Vertiefungen wurden ebenfalls bereits erläutert. Außerdem kann zur weiteren Versteifung auf den Schaum eine Carbon/Carbon-Rückplatte aufgebracht werden, wobei die Carbon/Carbon-Rückplatte mit dem Schaum durch die Infiltration des Silizium enthaltenden Materials monolithisch verbunden wird. Zusätzlich kann eine schleifbare und polierbare Oberflächenbeschichtung auf der C/SiC-Frontplatte aufgebracht werden und die Oberflächenbeschichtung kann mit der C/SIC-Frontplatte monolithisch verbunden werden. Die Vorteile dieser möglichen Maßnahmen wurden ebenfalls bereits anhand der erfindungsgemäßen Reflektoranordnung erläutert.

Weiterhin kann als spezielle Weiterbildung der Erfindung vorgesehen werden, dass die polymere Struktur mit einer speziellen Suspension bestehend aus einer Aufschlämmung von SiC, Silizium und Kohlenstoff in einem organischen Flüssigkeitsgemisch überzogen wird.

Für das Fertigungsverfahren kann insbesondere vorgesehen werden, dass das keramische Zwischenprodukt nach der Pyrolyse mit Hilfe eines Klebers mit der Frontplatte und/oder mit der Rückplatte verbunden wird. Der Kleber enthält bevorzugt Siliziumcarbid und/oder Kohlenstoff und/oder Silizium. Anschließend erfolgt die bereits beschriebene Infiltration eines Silizium enthaltenden Materials bei Temperaturen über 1350 ° C. Die geeignete Wahl für den Kleber kann dann mit zur Realisierung der bereits beschriebenen monolithischen Verbindung beitragen.

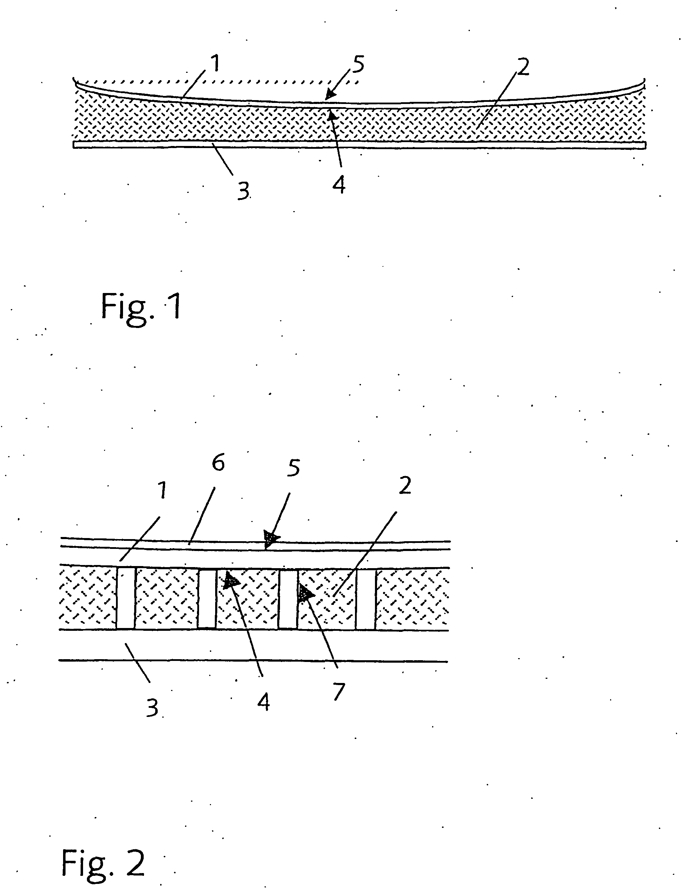

Ein spezielles Ausführungsbeispiel der vorliegenden Erfindung wird nachfolgend anhand der Fig. 1 und 2 erläutert

Es zeigen:
- Fig. 1: einen Querschnitt durch einen Reflektor, der nach dem erfindungsgemäßen Verfahren hergestellt ist; und
- Fig. 2: einen vergrößerten Ausschnitt des Querschnittes nach Fig. 1.

Bei dem Verfahren nach der vorliegenden Erfindung wird ein keramischer Schaum 2 zumindest mit einer keramischen Frontplatte 1 verbunden bzw. es wird die Frontplatte 1 bei der Herstellung der Schaumstrukturen 2 direkt an der jeweiligen Schaumstruktur 2 integriert.

Als Ausgangsmaterial für die Herstellung des keramischen Schaumes wird eine poröse polymere Struktur, vorzugsweise Polyurethan in Form eines Schaumgerüstes oder ein sonstiges Ausbrandmittel, wie z.B. ein Polyamidgranulat verwendet. Dieses Ausgangsmaterial wird entweder in eine Suspension eines keramischen Ausgangsmaterials getaucht, was in einem einzigen Verfahrensschritt oder in mehreren Tauchschritten erfolgen kann, oder es wird eine solche Suspension beispielsweise unter Ausnutzung von Kapillareffekten in die polymere Struktur eingesogen. Anschließend erfolgt bei Temperaturen von 100 bis 160 °C eine Trocknung der Struktur.

Wichtig bei diesem Verfahren ist, dass die Bestandteile der Suspension Materialien beinhalten oder aus den gleichen Materialien bestehen, wie die noch aufzubringende keramische Frontplatte 1. Zu diesem Zweck wird eine Suspension verwendet, die aus einem Schlicker aus einer Aufschlämmung von feinem SiC, Si und Kohlenstoff in einem organischen Flüssigkeitsgemisch besteht. Eine solche Suspension kann insbesondere nach den folgenden Einzelschritten hergestellt werden.

Unter der Zugabe des Bindemittels wird das Siliziumcarbidpulver vermischt. Die Viskosität wird auf eine wässerige Konsistenz durch Zugabe des Lösungsmittels eingestellt. Vorzugsweise wird als Lösungsmittel ein organisches Lösungsmittel, beispielsweise ein Gemisch aus Isopropylalkohol, Butylacetat, Butandiol und Po-lyethylenglykol als Bindemittel Phenolharz oder Novolacke verwendet. Dieses Gemisch wird unter ständigem Rühren dispergiert. Nach der Homogenisierungszeit werden Kohlenstoff, vorzugsweise in Form von Feinstgraphit und/oder Ruß und/oder Kohlefasern zugegeben. Nun wird das gesamte System in einem handelsüblichen Homogenisator dispergiert. Als letztes wird bei bestimmten Anwendungen noch Silizium zugegeben, um sicherzustellen, dass insbesondere bei integralen Strukturen bei dem anschließenden Thermalprozess der Flüssiginfiltration die Keramisierung der Schaumstruktur vollständig erfolgt.

Nach der Aushärtung der Schaumstruktur wird die polymere Struktur in einem Thermalprozess zwischen 900°C und 1200°C, idealerweise bei etwa 1000°C unter Luftabschluss vorzugsweise unter Stickstoff oder unter Vakuum pyrolysiert. Der Schlicker geht in ein keramisches Zwischenprodukt über, das bei Zimmertemperatur hart ist, bei Temperaturen größer 50°C jedoch eine gewisse Flexibilität aufweist.

Nach der Pyrolyse wird das keramische Zwischenprodukt, das bereits eine Schaumstruktur besitzt, fest mit einer Frontplatte 1 und/oder Rückplatte 3 aus einem Carbon-Carbon-Material verbunden. Die Frontplatte 1 besitzt dabei idealerweise bereits zumindest weitgehend die gewünschte Oberflächenkontur des späteren Reflektors. Die Rückplatte 3 ist optional und kann zur zusätzlichen Versteifung der Struktur vorgesehen werden. Ebenso können grundsätzlich auch zusätzliche Seitenplatten vorgesehen werden. Die Verbindung der Platten 1, 3 mit keramischen Zwischenprodukt erfolgt mit Hilfe eines Klebers, welcher aus einem Bindemittel und zumindest Siliziumcarbid, bevorzugt zusätzlich noch aus Kohlenstoff, besteht. Der Kleber enthält damit also zumindest weitgehend dieselben Substanzen wie die Schaumstruktur. Dadurch ist sichergestellt, dass kein unterschiedliches Verhalten von Kleber und Zwischenprodukt bzw. Schaumstruktur bei dem nachfolgend beschriebenen Thermalprozess auftritt, was sonst zu störenden Erscheinungen, wie Rissbildung oder Schrumpfung führen könnte.

Aus konstruktiven und/oder thermalen Gründen können auch Rippen bzw. Kanalstrukturen 7 auf der Rückseite der Frontplatte 1 und/oder Rückplatte 3 vorgesehen werden und in diesem Fall werden Schaumsegmente des Zwischenprodukts in die entsprechenden Segmente der Frontplatte 1 bzw. Rückplatte 3 geklebt. Die verklebten Strukturen werden anschließend bei Temperaturen zwischen 70°C und 170°C ausgehärtet.

Nach dem Aushärten der Struktur wird diese unter Vakuum bei Temperaturen von 1350°C bis 1700°C, idealerweise bei etwa 1600°C mit Silizium infiltriert. So entsteht aus der Carbon/Carbon-Struktur der Platten 1, 3 wie auch aus dem keramischen Zwischenprodukt und dem Kleber eine keramische C/SiC Struktur, bei der im Gegensatz zu Sinterprozessen von monolithischer Keramik nahezu kein Schrumpf auftritt. Aus der verklebten, Struktur entsteht dabei eine monolithische Struktur aus C/SiC-Frontplatte 1 mit C/SiC-Schaum 2, mit eventuellen zusätzlichen C/SiC-Platten als Rückplatte 3 und Seitenplatten. Durch Variation der Porosität der ursprünglichen Schaumstruktur können Flächengewicht und Steifigkeit des Reflektors eingestellt und optimiert werden.

Nach dem Infiltrationsprozess wird die Struktur gereinigt, vorzugsweise durch Sandstrahlen, sodass eine glatte Oberfläche frei von überschüssigem Silizium aus dem vorherigen Prozess entsteht. Nun wird die spätere Reflexions-Oberfläche 5 weitgehend entsprechend der gewünschten Endform grob vorgeschliffen. Dieses Vorschleifen soll im wesentlichen die Einhaltung der gewünschten Kontur der Reflexionsschicht des Reflektors sicherstellen.

Nach dem Vorschleifen wird zumindest die Oberfläche 5 mit einer Beschichtung 6 versehen. Hierfür können grundsätzlich alle Beschichtungen vorgesehen werden, die zur Herstellung einer schleifbaren und polierbaren Oberfläche geeignet sind, insbesondere solche, die monolithisch mit der Frontplatte 1 verbunden werden können und dazu ähnliche Materialien beinhalten wie die Frontplatte 1. Nachfolgend wird ein spezielles Verfahren zur Herstellung einer solchen Beschichtung beschrieben.

Zur Herstellung der Beschichtung 6 erfolgt die Herstellung eines Schlickers in Form einer Dispersion, welches aus Bindemittel, Lösungsmittel, metallischem und/oder keramischem Pulver sowie Kohlenstoff besteht. Damit kann die C/SiC-Frontplatte 1 derart beschichtet werden, dass in anschließenden Polierabläufen eine RMS-Oberflächenrauhigkeit von < 1 µm, vorzugsweise sogar kleiner 10 nm, erzielt werden kann.

Die Herstellung der Dispersion für die keramische Beschichtung erfolgt nach den im folgendend dargestellten Einzelschritten.

Unter Zugabe des Bindemittels wird Siliziumcarbidpulver mit diesem Bindemittel vermischt. Die Viskosität des 2-Stoff-Gemisches aus Siliziumcarbidpulver und Bindemittel wird auf eine ölige Konsistenz durch die Zugabe des Lösungsmittels eingestellt. Vorzugsweise wird als Lösungsmittel ein organisches Lösungsmittel, beispielsweise ein Gemisch aus Isopropylalkohol, Butylacetat, Butandiol und Po-lyethylenglykol verwendet. Dieses ölige Gemisch wird mittels eines handelsüblichen Homogenisators dispergiert. Nach der Homogenisierungszeit wird Kohlenstoff, vorzugsweise in Form von Feinstgraphit oder Ruß, zugegeben. Nach dieser Zugabe wird das Stoffsystem nun wiederum in dem Homogenisator dispergiert. Als letztes wird das metallische Pulver, vorzugsweise metallisches Silizium, zugegeben und anschließend kann das gesamte Stoffsystem nochmals homogenisiert werden. Während des gesamten Homogenisierungsprozesses kann stets Lösungsmittel zugegeben werden, um die für die spätere Anwendung notwendige Viskosität einzustellen. Die Viskosität richtet sich im wesentlichen nach dem Beschichtungsverfahren, mit welchem das Substrat, also insbesondere die Frontplatte 1 und gegebenenfalls auch die Rückplatte 3, später beschichtet werden soll. Während des Homogenisierungsprozesses wird bevorzugt die Viskosität mit geeigneten Meßmethoden wie beispielsweise mit einem handelsüblichen Viskosimeter oder Auslaufbecher kontrolliert.

Das Aufbringen der Schlicker-Dispersion kann in einer Spritztechnik, vorzugsweise mit Hilfe von Lackierwerkzeugen, erfolgen, wobei idealerweise mit geeigneten Werkzeugen einer Entmischung der Dispersion entgegengewirkt wird, um Inhomogenitäten an einzelnen Stellen zwischen der Beschichtung und dem Substrat bzw. Fehlstellen in der Beschichtung zu vermeiden.

Die Beschichtung kann in mehreren Einzelschritten erfolgen, d. h. die gesamte Beschichtung kann statt in einer einzigen Schicht auch in mehreren Schichten aufgetragen werden. Hierbei können beispielsweise Einzelschichten bis zu 0,5 mm erreicht werden. Nach jedem Beschichtungsvorgang kann bevorzugt eine Trocknung der jeweiligen Schicht vorgenommen werden. Eine solche Trocknung kann beispielsweise in einem entsprechenden Trockenschrank erfolgen. Hierbei richtet sich die Trocknungszeit im wesentlichen nach der Schichtdicke und nach der Anzahl der bereits aufgetragenen Schichten. Die Trocknungszeit zwischen den einzelnen Beschichtungen kann beispielsweise zwischen 30 Minuten und 120 Minuten betragen. Die Trocknungstemperätur liegt idealerweise unterhalb von 150° C und beträgt beispielsweise zwischen 70 und 120° C.

Sobald die Beschichtung 6 gemäß den vorgenannten Arbeitsschritten fertiggestellt ist, wird das beschichtete Substrat in einem Thermalprozess unter Vakuum oder Schutzgas auf Temperaturen oberhalb 1600 ° C aufgeheizt. Bei diesem Thermalprozess kommt es, analog zum vorher beschriebenen Verfahren, auf Grund der Reaktionsaffinität zwischen Silizium und Kohlenstoff zur Bildung von Siliziumcarbid, größtenteils zu β-SiC, wobei der in der Beschichtung 6 vorhandene Kohlenstoff teilweise mit dem in der aufgetragenen Schicht vorhandenem Silizium und/oder teilweise mit dem im Substrat der Frontplatte 1 vorhandenen Restsilizium in der Matrix der Frontplatte 1 zu Siliziumcarbid reagiert. Durch einsetzende Diffusionsprozesse zwischen dem Silizium im Substrat der Frontplatte 1 und dem Kohlenstoff in der Beschichtung 6 kommt es zu einer Kontaktreaktion durch Bildung von Siliziumcarbid, wodurch es zu einer festen Anbindung der Beschichtung 6 an die Frontplatte 1 kommt. Es erfolgt dabei die Ausbildung einer monolithischen Struktur. Durch das in der Beschichtung 6 vorhandene Siliziumcarbid wird gewährleistet, dass sich während des Thermalprozesses eine sehr dichte Oberflächenschicht ausbildet, welche auf Grund einer optimierten Komgrößenverteilung erzielt werden kann. Durch eine geeignete Auswahl des Stoffsystems des Schlickers kann während des Thermalprozesses erreicht werden, dass die sich ausbildende Schicht keine Porosität ausbildet, also weder eine offene noch eine geschlossene Porosität, und die Beschichtung 6 somit keine Fehlstellen aufweist. Nach Ende dieses Thermalprozesses kann die beschichtete Frontplatte 1 mit für optische Anwendungen geeigneten Bearbeitungsmaschinen poliert werden.

Ein erfindungsgemäßer Reflektor zeichnet sich durch mehrere Vorteile aus:

Verminderte Herstellungskosten: Verglichen beispielsweise mit der relativ komplizierten Frästechnik für die Reflektor-Rückseite, wie sie im Stand der Technik offenbart ist, ist das Aufbringen des C/SiC Schaumes einfach. Die monolithische Verbindung des Schaumes mit seiner Frontplatte geschieht auf einfache Weise während und zusammen mit der Si-Infiltration der Frontplatte.

Die Erzielung eines extrem niedrigen Flächengewichtes von weniger als 15 Kg/m², insbesondere von weniger als 10 Kg/m² ist möglich.

Aufgrund der monolithischen Struktur des gesamten Reflektors liegen keine unterschiedlichen Materialschichten mit unterschiedlichen thermischen Eigenschaften vor, d.h. es besteht nicht die Gefahr einer Ablösung verschiedener Materialschichten voneinander oder einer Rissbildung aufgrund eines unterschiedlichen Ausdehnungsverhaltens.

Durch Verwendung einer porösen Schaumstruktur 2 ergibt sich eine bessere Wärmeübertragung von der Frontplatte 1 in das keramische Material 2 bzw. an ein Temperiermedium (z.B. Luft oder Flüssigkeit), das dem keramischen Material 2 zu dessen Durchströmung zugeführt werden kann. Soll Wärme, die beispielsweise durch das Auftreffen hoher Strahlungsleistungen auf die Reflektor-Oberfläche in die Reflektor-Frontplatte 1 eingebracht wird, abgeführt werden, so kann insbesondere eine aktive Kühlung, z.B. durch rückwärtig eingeblasene Luft oder eingeführtes flüssiges Kühlmittel, erfolgen. Es ergibt sich dabei beispielsweise, dass der Wärmeübergang auf durch eine Schaumstruktur 2 geblasene Luft 10 mal höher ist als bei einer Reflektorstruktur ohne Schaum oder vergleichbares poröses Material. Dies ergibt sich, da die innere Oberfläche der Schaumstruktur 2 sehr viel größer ist als die Oberfläche, die von Luft oder einem ähnlichen Kühlmittel umströmt werden kann, wenn keine Schaumstruktur 2 oder ähnliche poröse Struktur vorliegt.

Der "Quiltingeffekt" (= "Steppdeckeneffekt") wird vermieden: Der bereits beschriebene Steppdeckeneffekt, der typisch für die herkömmlichen Strukturen mit Stützrippen ist, kann, wie leicht einsichtig ist, bei einer Ausbildung des keramischen Materials als poröse Schaumstruktur, vermieden werden.

Der beschriebene vollkeramische C/SiC Leichtgewicht-Reflektor kann insbesondere als Element für optische Geräte, z.B. Teleskope oder ähnliches, beispielsweise in der Raumfahrttechnik, verwendet werden.

## Patentansprüche

1. Verfahren zur Herstellung eines Reflektors, wobei ein keramisches Material (2) mit niedrigem Flächengewicht, um die Herstellung des Reflektors mit einem Flächengewicht von weniger als 15 kg/m² zu ermöglichen, auf eine erste Oberfläche (4) einer gemäß der Reflektorkontur vorgeformten keramischen Frontplatte (1) aufgebracht wird und mit der Frontplatte (1) monolithisch verbunden wird,
**dadurch gekennzeichnet, dass**
- eine polymere Schaumstruktur mit einer Suspension aus einem keramischen Ausgangsmaterial, welches Silizium enthält, überzogen wird,
- anschließend zur Erzeugung eines keramischen Zwischenproduktes mit einer Schaumstruktur unter Luftabschluss pyrolysiert wird,
- nach der Pyrolyse das keramische Zwischenprodukt auf eine Carbon/Carbon-Frontplatte (1) aufgebracht wird, und
- anschließend eine Infiltration eines Siliziums enthaltenden Materials bei Temperaturen über 1350° C zur Herstellung einer monolithischen C/SiC-Struktur aus einem C/SiC-Schaum (2) und einer C/SiC-Frontplatte (1) erfolgt.

2. Verfahren nach Anspruch 1,
**dadurch gekennzeichnet, dass**
vor dem Aufbringen des Schaumes (2) auf der ersten Oberfläche (4) der Frontplatte (1) Erhebungen und/oder Vertiefungen (7) aus dem gleichen Material wie das der Frontplatte (1) erzeugt werden.

3. Verfahren nach einem der Ansprüche 1 oder 2,
**dadurch gekennzeichnet, dass**
vor der Infiltration des Silizium enthaltenden Materials auf den Schaum (2) eine Carbon/Carbon-Rückplatte (3) aufgebracht wird und dass die Carbon/Carbon-Rückplatte (3) mit dem Schaum (2) durch die Infiltration des Siliziums enthaltenden Materials monolithisch verbunden wird.

4. Verfahren nach einem der Ansprüche 1 bis 3,
**dadurch gekennzeichnet, dass**
eine schleifbare und polierbare Oberflächenbeschichtung (6) auf der C/SiC-Frontplatte (1) aufgebracht wird und die Oberflächenbeschichtung (6) mit der C/SiC-Frontplatte (1) monolithisch verbunden wird.

5. Verfahren nach einem der Ansprüche 1 bis 4,
**dadurch gekennzeichnet, dass**
die polymere Struktur mit einer Suspension bestehend aus einer Aufschlämmung von SiC, Silizium und Kohlenstoff in einem organischen Flüssigkeitsgemisch überzogen wird.

## Claims

1. A method of producing a reflector, wherein a ceramic material (2) with low weight per unit area, so as to make it possible to produce the reflector with a weight per unit area lower than 15 kg/m², is applied to a first surface (4) of a ceramic front plate (1) preformed according to the reflector contour and is bonded monolithically to the front plate (1),
**characterised in that**
- a polymeric foam structure is coated with a suspension of a ceramic starting material which contains silicon,
- following the formation of a ceramic intermediate product with a foam structure it is pyrolysed under air exclusion,
- after the pyrolysis the ceramic intermediate product is applied to a carbon/carbon front plate (1), and
- subsequently, an infiltration of a material containing a silicon is carried out at temperatures above 1350°C to produce a monolithic C/SiC structure consisting of a C/SiC foam (2) and a C/SiC front plate (1).

2. Method according to Claim 1, **characterised in that**, before applying the foam material (2) to the first surface (4) of the front plate (1), raised portions and/or recesses (7) are formed from the same material as the front plate (1).

3. Method according to Claim 1 or Claim 2, **characterised in that**, before the infiltration of the material containing silicon from the foam material (2), a carbon/carbon back plate (3) is applied, and **in that** the carbon/carbon back plate (3) is bonded monolithically to the foam material (2) by the infiltration of the material containing the silicon

4. Method according to any one of Claims 1 to 3, **characterised in that** a surface coating (6), which can be ground and polished, is applied to the C/SiC front plate (1) and the surface coating (6) is bonded monolithically to the C/SiC front plate (1).

5. A method according to any one of Claims 1 to 4, **characterised in that** the polymeric structure is coated with a suspension consisting of a slurry of SiC, silicon and carbon in an organic liquid mixture.

## Revendications

1. Procédé de fabrication d'un réflecteur, sachant que pour permettre la fabrication d'un réflecteur avec un poids par unité de surface inférieur à 15 kg/m², un matériau céramique (2) ayant un faible poids par unité de surface est déposé sur une première surface (4) d'une plaque frontale (1) céramique, préformée selon le contour du réflecteur, et est assemblée de manière monolithique à la plaque frontale (1),
**caractérisé en ce que**
- une structure polymère en mousse synthétique est revêtue d'une suspension formée par un matériau de base céramique contenant du silicium,
- subit ensuite une pyrolyse à l'abri de l'air pour former un demi-produit céramique avec une structure en mousse synthétique,
- après la pyrolyse, le demi-produit intermédiaire est appliqué sur une plaque frontale carbone/carbone (1), et
- ensuite, un matériau contenant du silicium est infiltré à des températures supérieures à 1 350°C en vue de réaliser une structure monolithique C/SiC à partir d'une mousse synthétique C/SiC (2) et d'une plaque frontale C/SiC (1).

2. Procédé selon la revendication 1, **caractérisé en ce que**, avant l'application de la mousse synthétique (2) sur la première surface (4) de la plaque frontale (1), des bosses et/ou des creux (7) sont réalisés dans le même matériau que celui de la plaque frontale (1).

3. Procédé selon la revendication 1 ou 2, **caractérisé en ce que**, avant l'infiltration du matériau contenant du silicium, une plaque arrière carbone/carbone (3) est déposée sur la mousse synthétique (2) et **en ce que** la plaque arrière carbone/carbone (3) est assemblée de manière monolithique à la mousse synthétique (2) sous l'effet de l'infiltration du matériau contenant du silicium.

4. Procédé selon l'une quelconque des revendications 1 à 3, **caractérisé en ce qu'**un revêtement de surface (6), apte à être meulé et poli, est déposé sur la plaque frontale C/SiC (1) et le revêtement de surface (6) est assemblé de manière monolithique à la plaque frontale C/SiC (1).

5. Procédé selon l'une quelconque des revendications 1 à 4, **caractérisé en ce que** la structure polymère est revêtue d'une suspension formée par une barbotine de SiC, silicium et carbone dans un mélange de liquide organique.
